# FASCICULE DE BREVET EUROPEEN

(11) **EP 3 925 753 B1**
(45) Date de publication et mention de la délivrance du brevet: **05.07.2023**
(21) Numéro de dépôt: 21173226.8
(22) Date de dépôt: 11.05.2021
(51) Int. Cl.: B29C 33/12, B29C 33/30, B29C 33/42

(54) **INSERT POUR MOULE DE FABRICATION**
EINSATZ FÜR HERSTELLUNGSFORM
INSERT FOR A MANUFACTURING MOULD

(30) Priorité: 16.06.2020 FR 2006248
(43) Date de publication de la demande: 22.12.2021
(73) Titulaire: Renault s.a.s, 92100 Boulogne Billancourt (FR)
(72) Inventeur: BERLUCHON, Jérémy, 92170 Vanves (FR); CASTIER, Marty, 91470 Forges-les-Bains (FR)
(74) Mandataire: Renault Group

(56) Documents cités:
- EP-A1- 0 673 745
- FR-A1- 2 996 799

## Description

L'invention a pour objet un insert pour moule de fabrication, notamment dans le domaine de l'automobile.

Lors du développement d'un nouveau véhicule, il est fréquent de concevoir différentes versions d'une pièce. Lorsque cette pièce est en matériau polymère, il peut alors être nécessaire de modifier le moule pour réaliser différentes versions de la pièce. Ces versions peuvent différer en des emplacements spécifiques, de sorte que l'on peut prévoir de réaliser des parties de moule échangeables qui sont adaptées à chaque version. De telles parties de moule échangeables, aussi appelées « pavés », sont fixées par une ou plusieurs vis au moule et doivent donc être changées pour des versions différentes. Cette opération est relativement longue à réaliser pour l'opérateur et peut être source d'erreur si de nombreux pavés différents existent. Par ailleurs, en cas de chute sur la matrice du moule, le pavé peut endommager ce dernier. Enfin, il faut stocker le ou les pavés non utilisés. Le document FR 2 996 799 A1 décrit un insert pour moule de fabrication d'une pièce conforme au préambule de la revendication 1.

Il existe donc un besoin pour simplifier le changement de version d'un moule.

Un premier objet de l'invention concerne un insert pour moule de fabrication d'une pièce, comprenant une partie encastrable et une surface externe, la partie encastrable étant destinée à être encastrée à l'intérieur d'un logement dudit moule la surface externe affleurant avec une surface du moule, caractérisé en ce que :
- un orifice central présentant une symétrie de révolution traverse la partie encastrable de part en part et débouche du côté de la surface externe de l'insert,
- une forme externe de la partie encastrable ne comprenant pas la surface externe de l'insert présente une symétrie axiale par rapport à l'axe de l'orifice central,
- la surface externe présente deux zones d'empreinte de forme différente de part et d'autre de l'orifice central et disposées symétriquement par rapport à celui-ci.

Ces zones d'empreintes définissent ainsi des zones de forme moulante différente de la surface externe mais disposées symétriquement par rapport à l'orifice central. Cet agencement permet de positionner l'insert dans deux positions à l'intérieur d'un logement d'un moule : une première position de moulage dans laquelle l'une des deux zones d'empreinte de la surface externe est située d'un côté du logement du moule recevant l'insert et une deuxième position de moulage dans laquelle l'autre des deux zones d'empreinte de la surface externe est située de ce même côté du logement. Ceci permet de concevoir un unique insert pour deux versions différentes de la même pièce.

On notera que la partie de surface externe ne comprenant pas les zones d'empreinte peut avantageusement présenter une symétrie par rapport à l'orifice central.

Avantageusement, l'orifice central peut présenter, à distance de son extrémité débouchant sur la surface externe, une restriction de sa section transversale formant une butée. Cette butée peut notamment servir à maintenir l'insert en liaison avec le moule en empêchant une extraction complète de l'insert par coopération avec une vis, notamment une tête de vis insérée à l'intérieur de l'orifice central.

Avantageusement, la partie encastrable peut présenter d'un côté opposé à la surface externe, une partie présentant une symétrie axiale de révolution par rapport à l'axe de l'orifice central, coaxiale avec l'orifice central qui la traverse. Ceci permet de maintenir l'insert en partie à l'intérieur du logement, l'insert pouvant pivoter de la première position à la deuxième position par rotation, cette rotation étant guidée par la partie à symétrie de révolution, coopérant éventuellement au moins en partie avec une portion de forme complémentaire du logement de moule.

Avantageusement, l'insert peut comprendre deux orifices latéraux traversant parallèles à l'orifice central et symétriques par rapport à l'axe de celui-ci, optionnellement taraudés. Ces orifices peuvent être utilisés pour fixer l'insert de manière amovible au moule, notamment par vis.

Avantageusement, il peut être préférable qu'aucun orifice ne débouche au niveau des zones d'empreinte de la surface externe de l'insert.

Un autre objet de l'invention concerne un moule de fabrication d'une pièce présentant une matrice et au moins un insert selon l'invention, le moule comprenant un logement recevant chaque insert, ce logement étant de forme complémentaire de la forme externe de la partie encastrable de l'insert, une zone d'empreinte de la surface externe de l'insert affleurant avec une surface moulante de la matrice située autour du logement lorsque l'insert est à l'intérieur du logement.

On comprend ainsi que l'insert, du fait de la symétrie de la forme externe de sa partie encastrable, peut être positionné dans deux positions de moulage différentes par rapport au moule à l'intérieur du logement, tel qu'expliqué plus haut.

Notamment, les deux zones d'empreintes de la surface externe de l'insert sont positionnées de sorte que, dans chaque position de moulage, seule l'une des zones d'empreinte affleure avec la surface moulante de la matrice. Autrement dit, dans chaque position de moulage, une partie au moins de la surface externe de l'insert affleure avec une surface du moule, cette partie comprenant notamment l'une des zones d'empreinte affleurant une partie de surface moulante de la matrice du moule.

Avantageusement, l'insert peut être fixé de manière amovible au moule, notamment par une vis passant par l'orifice central ou par l'un des orifices latéraux mentionné plus haut, de préférence par l'un des orifices latéraux.

Avantageusement, une vis insérée à l'intérieur de l'orifice central présentant une extrémité taraudée saillant de l'insert du côté opposé à la surface externe, cette extrémité taraudée étant vissée à l'intérieur du moule. Cette vis peut assurer la fixation de l'insert au moule, mais de préférence servira uniquement à guider le pivotement de l'insert entre les deux positions de celui-ci. Dans ce cas, seule l'extrémité de la vis située à l'intérieur du moule peut être taraudée et la vis reste en position lors du changement de position de l'insert. L'insert est alors mobile par coulissement le long de la tige de la vis entre une position de moulage, dans laquelle une zone d'empreinte de sa surface externe affleure la surface moulante de la matrice autour du logement, et une position de réglage, dans laquelle sa partie encastrable est suffisamment en dehors du logement pour autoriser une rotation de l'insert autour de la vis. On comprend ainsi que la vis sert de pivot à l'insert.

Avantageusement, dans la position de réglage, une tête de la vis peut être en butée contre une restriction de la section transversale de l'orifice central de l'insert. Ceci peut permettre d'empêcher une désolidarisation complète de l'insert et de la matrice de sorte que l'insert ne peut être perdu, ni tomber sur la matrice. Notamment, la restriction peut être située à une distance de la surface externe de l'insert suffisante pour qu'une vis insérée à l'intérieur de l'orifice central ne fasse pas ou peu saillie de la surface externe lorsque l'insert est en position de moulage, et, dans la position de réglage de l'insert, ce dernier puisse pivoter autour de la vis, la tête de cette dernière étant en butée contre la restriction.

Afin d'éviter d'avoir à obturer l'orifice central ou le ou les orifices latéraux lors de la fabrication de la pièce, l'orifice central de l'insert peut avantageusement être situé en dehors de la surface moulante de la matrice, et optionnellement chacun des orifices latéraux peut également être situé en dehors de la surface moulante de la matrice, lorsque l'insert est dans une position de moulage. Autrement dit, dans chaque position de moulage de l'insert, ces orifices peuvent être situés en dehors des zones d'empreinte de forme différente de la surface externe de l'insert.

L'invention concerne également un procédé de montage d'un insert selon l'invention à une matrice d'un moule de fabrication d'une pièce, le moule comprenant un logement de forme complémentaire de la forme externe de la partie encastrable de l'insert, le procédé de montage comprenant :
(i) une étape d'introduction de l'insert à l'intérieur du logement du moule dans une position de moulage dans laquelle la partie encastrable de l'insert est insérée à l'intérieur du logement et une zone d'empreinte de la surface externe de l'insert affleure avec une surface moulante de la matrice située autour du logement,
(ii) une étape d'introduction d'une vis à l'intérieur de l'orifice central de l'insert, une extrémité taraudée de la vis étant vissée dans le moule,
(iii) une étape de réglage de la position de l'insert comprenant :
   - le coulissement de l'insert le long de la vis jusqu'à une position de réglage dans laquelle sa partie encastrable est suffisamment en dehors du logement pour autoriser une rotation de l'insert autour de la vis,
   - la rotation de l'insert autour de la vis jusqu'à ce que la zone d'empreinte souhaitée de la surface externe soit en regard d'une zone souhaitée de la surface moulante de la matrice,
   - le coulissement de l'insert le long de la vis jusqu'à la position de moulage correspondante.
(iv) une étape de fixation de l'insert à l'intérieur du logement.

De préférence, l'étape (iv) de fixation est une étape de fixation amovible, par exemple au moyen d'une vis introduite dans l'un des orifices latéraux de l'insert et venant en prise avec le moule.

L'invention est maintenant décrite en référence aux dessins annexés, non limitatifs, dans lesquels :
[Fig. 1] La figure 1 représente partiellement en perspective un moule de fabrication équipé de plusieurs inserts selon un mode de réalisation de l'invention.
[Fig. 2] La figure 2 représente partiellement le moule de la figure 1, l'insert étant dans une position de réglage.
[Fig. 3] La figure 3 est une vue en perspective de l'insert représenté figures 1 et 2.
[Fig. 4] La figure 4 est une vue en perspective partiellement en coupe du moule et de l'insert, celui-ci étant dans une position de réglage.
[Fig. 5] La figure 5 est une vue agrandie montrant un insert dans une position de montage à l'intérieur du logement d'un moule.

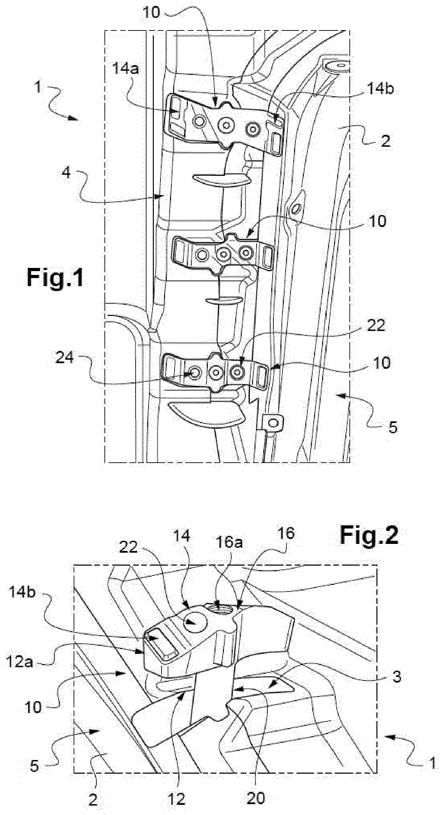

La figure 1 représente partiellement un moule 1 de fabrication d'une pièce. Ce type de moule peut notamment servir à la réalisation de pièces en matériau polymère, plus particulièrement destinées au domaine de l'automobile. A titre d'exemple, on pourra fabriquer de cette manière un hayon ou tout autre élément d'un véhicule automobile en matériau apte à être fabriqué par moulage. L'invention est cependant utilisable pour tout type de moule de fabrication et toute pièce réalisée par moulage.

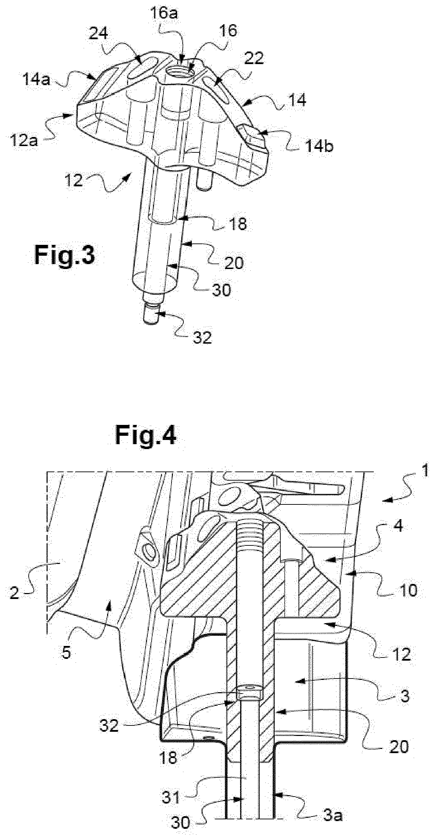

Le moule 1 représenté comprend trois inserts 10 du type de celui représenté sur la figure 3.

Le moule 1 présente une partie formant une matrice 2, cette matrice 2 comprenant une partie structurelle (non moulante) et une partie moulante, pour la mise en forme de la pièce à mouler. Sur les figures, la référence 4 désigne la surface de la partie structurelle du moule, aussi appelée surface non moulante, et la référence 5 désigne la surface de la partie moulante, aussi appelée surface moulante, qui sera en contact avec le matériau qui doit être moulé. Autrement dit, le matériau à mettre en forme n'est en contact qu'avec la surface moulante 5 du moule 1.

L'insert 10 est adapté pour coopérer avec le moule 1. A cet effet, le moule 1, plus précisément la matrice 2, est pourvue d'un logement 3 pour chaque insert 10. Chaque logement 3 est de forme complémentaire de la partie encastrable 12 d'un insert 10, tel qu'expliqué ci-après. Chaque logement 3 est également situé en partie au niveau de la partie structurelle et en partie au niveau de la partie moulante de la matrice 2.

Chaque insert 10 présente une structure similaire, un seul sera donc décrit de manière détaillée en référence aux figures 2-5.

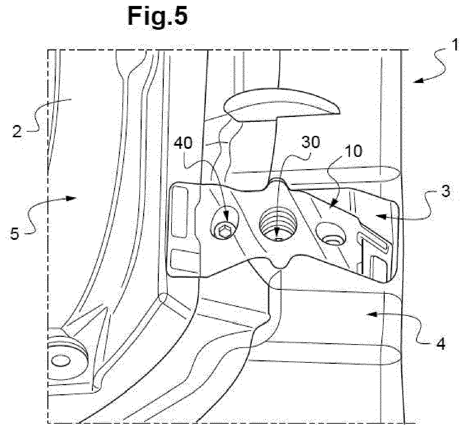

L'insert 10 comprend une partie encastrable 12 et une surface externe 14. Cette surface externe 14 de l'insert forme la surface visible de l'insert lorsqu'il est inséré à l'intérieur du logement du moule. La partie encastrable 12 est destinée à être encastrée à l'intérieur d'un logement 3 de forme complémentaire du moule. Lorsque la partie encastrable 12 de l'insert est insérée à l'intérieur de ce logement 3, notamment dans une position d'utilisation appelée position de moulage (représentée figure 1), une partie de la surface externe 14 affleure avec la surface 5 de la matrice. Le reste de la surface externe 14 de l'insert 10 peut affleurer ou non avec la surface 4 du moule entourant le logement 3, et voisine de la surface moulante 5 de la matrice (voir figures 1 et 5).

La partie encastrable 12 présente un orifice central 16 à symétrie de révolution la traversant de part en part et débouchant du côté de la surface externe 14. Par ailleurs, une forme externe 12a de la partie encastrable 12, ne comprenant pas la surface externe 14 de l'insert, présente une symétrie axiale par rapport à l'axe de l'orifice central 16. Enfin, la surface externe 14 présente deux zones d'empreinte 14a, 14b de forme différente de part et d'autre de l'orifice central 16 et disposées symétriquement par rapport à celui-ci.

Ces zones d'empreinte 14a, 14b, qui forment des zones ou surfaces moulantes, correspondent ainsi à des formes d'empreinte différentes pouvant servir à la fabrication de différentes versions d'une même pièce. Par exemple, l'une des zones d'empreinte peut être conformée pour créer un orifice dans la pièce à fabriquer alors que l'autre des zones d'empreinte peut être conformée pour former une face lisse de la pièce à fabriquer. Bien entendu, ces zones d'empreinte peuvent être conformées pour réaliser toute autre forme de surface de la pièce à fabriquer.

De manière générale, ces zones d'empreinte 14a, 14b sont positionnées de sorte que, lorsque l'insert 10 est inséré dans un logement 3 du moule, l'une des zones d'empreinte affleure la surface moulante 5 de la matrice, et en particulier forme une partie de cette surface moulante, notamment une partie de bord de la surface moulante 5 de la matrice.

Avantageusement, tel que représenté, ces zones d'empreinte 14a, 14b sont de préférence situées à des extrémités opposées de la surface externe de l'insert et correspondent à des portions de la partie moulante formant un bord de celle-ci.

Afin de permettre la retenue de l'insert par rapport au moule lors de la cinématique de changement de version, l'orifice central 16 présente, à distance de son extrémité 16a débouchant sur la surface externe 14, une restriction 18 de sa section transversale. Cette restriction peut être formée par une collerette s'étendant sur une partie ou toute la périphérie de l'orifice central, par exemple lorsque l'orifice central est cylindrique. La restriction peut encore être formée par une portion de l'orifice central de diamètre plus faible qu'une portion de l'orifice central s'étendant de son extrémité 16a à la restriction 18. La variation du diamètre interne de l'orifice central entre l'extrémité 16a et la restriction 18 peut être continue (forme conique de l'orifice central) ou discontinue (succession de deux portions cylindriques). L'invention n'est toutefois pas limitée à ces réalisations, et toute autre forme de restriction peut être envisagée.

Dans l'exemple représenté, la partie encastrable 12 présente d'un côté opposé à la surface externe 14, une partie 20 présentant une symétrie axiale de révolution par rapport à l'axe de l'orifice central. Cette partie 20 est ici cylindrique, pour une réalisation simple et pour un meilleur guidage en rotation de l'insert. Dans l'exemple, cette partie 20 est coaxiale avec l'orifice 16 qui la traverse.

On pourrait toutefois prévoir une forme plus complexe, telle qu'une forme tronconique dont l'extrémité de plus petit diamètre est située du côté opposé à la surface externe 14 ou encore une forme présentant une ou plusieurs portions tronconiques et/ou une ou plusieurs portions cylindriques.

L'insert présente enfin deux orifices latéraux 22, 24 traversant de part en part l'insert, ces orifices étant parallèles à l'orifice central (leurs axes sont parallèles) et symétriques par rapport l'axe de celui-ci.

On notera que, dans l'exemple représenté, pour faciliter la manipulation de l'insert et le changement de zone d'empreinte, chacun des orifices 16, 22, 24 est situé en dehors d'une zone d'empreinte 14a, 14b.

Dans la position de moulage représenté figure 1, la surface externe 14 de l'insert 10 affleure ainsi avec la surface non moulante 4 du moule entourant le logement 3, l'une des zones d'empreinte 14b affleurant avec la surface moulante 5 de la matrice. Une vis 30 présentant une extrémité 32 taraudée traverse l'orifice central 16 de l'insert, son extrémité taraudée 32 étant vissée à l'intérieur du moule 1. Ici, la vis est taraudée uniquement au niveau de son extrémité en prise avec le moule 1. Par ailleurs, la vis présente une tête 34 apte à venir en butée contre la restriction 18. De cette manière, l'insert 10 est mobile par coulissement le long de la vis 30, et notamment de la tige 31 de la vis, entre la position de moulage de la figure 1, dans laquelle une zone d'empreinte 14b de la surface externe 14 affleure la surface moulante 5 de la matrice autour du logement 3, et une position de réglage représentée figures 2 et 4, dans laquelle sa partie encastrable 12 est suffisamment en dehors du logement 3 pour autoriser une rotation de l'insert autour de la vis 30, la restriction 18 empêchant par ailleurs une extraction complète de l'insert en dehors du logement. Lors d'un déplacement de l'insert d'une position de moulage vers la position de réglage, la tête 34 de la vis vient en effet en butée contre la restriction 18 de la section transversale de l'orifice central de l'insert en fin de course de l'insert.

On comprend ainsi que la longueur de la tige 31 de la vis et la position suivant l'axe de l'orifice central de la restriction 18 de celui-ci permettent de définir une distance de débattement, ou course de déplacement, de l'insert entre ses positions de moulage et de réglage. L'homme du métier pourra ainsi choisir cette distance de débattement afin qu'en position de réglage, la rotation de l'insert autour de la tige de la vis soit possible, la tête de la vis étant en butée contre la restriction, alors qu'en position de moulage, la vis est entièrement située à l'intérieur de l'orifice central, ou sa tête affleurent la surface externe 14, ou encore sa tête fait saillie de la surface externe 14 (il suffit alors d'adapter le moule en conséquence).

Ici, dans la position de réglage, seule la partie 20 à symétrie de révolution de l'insert reste au moins en partie à l'intérieur du logement 3, notamment à l'intérieur d'une portion 3a de logement de forme similaire (fig. 4).

Pour une mise en oeuvre simplifiée, dans l'exemple, l'orifice central 16, mais aussi les orifices latéraux, sont situés en dehors de la surface moulante 5 de la matrice, autrement dit en dehors de la surface de l'outil servant à la fabrication de la pièce.

Le montage d'un insert 10 est maintenant décrit. L'insert 10 est tout d'abord introduit à l'intérieur du logement 3 par sa partie 20 à symétrie de révolution et déplacé en direction de la matrice 2 suivant la direction de l'axe de l'orifice central 16 jusqu'à ce que sa partie encastrable 12 soit insérée à l'intérieur du logement, une partie de sa surface externe 14 affleurant avec la surface moulante 5 de la matrice. Puis, la vis 30 est introduite à l'intérieur de l'orifice central 16 et sa partie taraudée 32 vissée à l'intérieur de la matrice 2. La fixation de l'insert est réalisée ensuite par une vis 40 introduite par l'un des orifices latéraux 22, 24 et venant en prise avec le moule, de préférence du côté de la partie moulante de la matrice afin d'assurer un bon maintien de la zone d'empreinte par rapport à la matrice et sa partie moulante.

Lorsque l'insert n'est pas dans la position de moulage souhaitée ou doit être changé de position de moulage, on procède au réglage de la position de l'insert de la manière suivante. Eventuellement après dévissage complet de la vis 40 si celle-ci a été préalablement mise en place, on fait coulisser l'insert le long de la vis 30 jusqu'à la position de réglage de l'insert dans laquelle sa partie encastrable 12 est suffisamment en dehors du logement 3 pour autoriser une rotation de l'insert autour de la vis centrale 30. On fait alors pivoter l'insert autour de la vis 30 jusqu'à ce que la zone d'empreinte souhaitée de la surface externe 14 soit en regard d'une zone souhaitée de la surface moulante 5 de la matrice. On peut ensuite ramener l'insert dans la position de moulage correspondante par coulissement de l'insert le long de la vis jusqu'à ce que l'insert soit à nouveau inséré (encastré) à l'intérieur du logement. Il reste ensuite à remettre en place la vis 40 pour fixer de manière amovible l'insert au moule.

Afin de faciliter l'extraction de l'insert 10 en dehors de son logement 3, l'orifice central 16 pourra présenter un taraudage du côté de son extrémité 16a, tel que représenté sur les figures. Une extraction au moyen d'un outil présentant une tige filetée est alors facile. Ce taraudage pourrait être remplacé par des rainures ou nervures formant un système de mise en prise de type à baïonnette.

La présente invention permet ainsi de diminuer le temps d'arrêt de production lors d'un changement de version dans l'outillage, l'insert restant en liaison avec la matrice du moule. La matrice est par ailleurs protégée, l'insert ne risquant plus de tomber sur celle-ci. L'invention permet également d'améliorer l'ergonomie des opérateurs en limitant les manipulations nécessaires au changement de version d'outillage. L'invention permet enfin de réduire les contraintes de conception du produit moulé.

## Revendications

1. Insert (10) pour moule (1) de fabrication d'une pièce, comprenant une partie encastrable (12) et une surface externe (14), la partie encastrable (12) étant destinée à être encastrée à l'intérieur d'un logement (3) dudit moule la surface externe affleurant avec une surface du moule,
- un orifice central (16) présentant une symétrie de révolution traversant la partie encastrable (12) de part en part et débouche du côté de la surface externe de l'insert,
- une forme externe (12a) de la partie encastrable, ne comprenant pas la surface externe de l'insert, présentant une symétrie axiale par rapport à l'axe de l'orifice central,
- la surface externe (14) présentant deux zones d'empreinte (14a, 14b) de forme différente de part et d'autre de l'orifice central et disposées symétriquement par rapport à celui-ci, **caractérisé en ce que** :
l'orifice central (16) présente, à distance de son extrémité (16a) débouchant sur la surface externe, une restriction (18) de sa section transversale formant une butée.

2. Insert (10) selon la revendication 1, **caractérisé en ce que** la partie encastrable (12) présente d'un côté opposé à la surface externe, une partie (20) présentant une symétrie axiale de révolution par rapport à l'axe de l'orifice central, coaxiale avec l'orifice central qui la traverse.

3. Insert (10) selon l'une quelconque des revendications 1 ou 2, **caractérisé en ce qu'**il comprend deux orifices latéraux (22, 24) traversant parallèles à l'orifice central (16) et symétriques par rapport à l'axe de celui-ci, optionnellement taraudés.

4. Moule de fabrication (1) d'une pièce présentant une matrice (2) et au moins un insert (10) selon l'une quelconque des revendications 1 à 3, le moule (1) comprenant un logement (3) recevant chaque insert, ce logement (3) étant de forme complémentaire de la forme externe de la partie encastrable (12) de l'insert, une zone d'empreinte de la surface externe (14) de l'insert affleurant avec une surface moulante (5) de la matrice située autour du logement lorsque l'insert est à l'intérieur du logement.

5. Moule (1) selon la revendication 4, dans lequel une vis (30) insérée à l'intérieur de l'orifice central (16) présentant une extrémité (32) taraudée saillant de l'insert du côté opposé à la surface externe (14), cette extrémité taraudée étant vissée à l'intérieur du moule.

6. Moule (1) selon la revendication 5, dans lequel seule l'extrémité de la vis située à l'intérieur du moule est taraudée et l'insert est mobile par coulissement le long de la vis entre une position de moulage, dans laquelle une partie de sa surface externe affleure la surface de la matrice autour du logement, et une position de réglage, dans laquelle sa partie encastrable est suffisamment en dehors du logement pour autoriser une rotation de l'insert autour de la vis.

7. Moule (1) selon la revendication 6, dans lequel, dans la position de réglage, une tête (34) de la vis est en butée contre une restriction (18) de la section transversale de l'orifice central de l'insert.

8. Moule (1) selon l'une quelconque des revendications 4 à 7, dans lequel, l'insert étant positionné à l'intérieur du logement du moule, l'orifice central (16) de l'insert est situé en dehors de la surface moulante (5) de la matrice, et optionnellement chacun des orifices latéraux (22, 24) est situé en dehors de la surface moulante (5) de la matrice.

9. Procédé de montage d'un insert (10) selon l'une quelconque des revendications 1 à 3 à une matrice (2) d'un moule (1) de fabrication d'une pièce, le moule (1) comprenant un logement (3) de forme complémentaire de la forme externe de la partie encastrable de l'insert, comprenant :
(i) une étape d'introduction de l'insert (10) à l'intérieur du logement (3), dans une position de moulage dans laquelle la partie encastrable (12) de l'insert est insérée à l'intérieur du logement et une zone d'empreinte de la surface externe (14) de l'insert affleure avec une surface moulante (5) de la matrice située autour du logement,
(ii) une étape d'introduction d'une vis (30) à l'intérieur de l'orifice central de l'insert, une extrémité taraudée de la vis étant vissée dans le moule,
(iii) une étape de réglage de la position de l'insert comprenant :
- le coulissement de l'insert le long de la vis jusqu'à une position de de réglage dans laquelle sa partie encastrable (12) est suffisamment en dehors du logement (3) pour autoriser une rotation de l'insert autour de la vis,
- la rotation de l'insert autour de la vis jusqu'à ce que la zone d'empreinte (14a, 14b) souhaitée de la surface externe soit en regard d'une zone souhaitée de la surface moulante de la matrice,
- le coulissement de l'insert le long de la vis jusqu'à la position de de moulage correspondante.
(iv) une étape de fixation de l'insert à l'intérieur du logement.

## Patentansprüche

1. Einsatz (10) für eine Form (1) zur Herstellung eines Teils, beinhaltend einen Einlassabschnitt (12) und eine Außenoberfläche (14), wobei der Einlassabschnitt (12) dazu bestimmt ist, in das Innere einer Aufnahme (3) der Form eingelassen zu werden, wobei die Außenoberfläche mit einer Oberfläche der Form bündig abschließt,
- wobei eine rotationssymmetrische mittige Öffnung (16) den Einlassabschnitt (12) von einer Seite zur anderen durchquert und auf der Seite der Außenoberfläche des Einsatzes mündet,
- wobei eine Außenform (12a) des Einlassabschnitts, die die Außenoberfläche des Einsatzes nicht beinhaltet, in Bezug auf die Achse der mittigen Öffnung eine axiale Symmetrie aufweist,
- wobei die Außenoberfläche (14) zwei unterschiedlich geformte Abdruckbereiche (14a, 14b) zu beiden Seiten der mittigen Öffnung aufweist, die in Bezug auf diese symmetrisch angeordnet sind, **dadurch gekennzeichnet, dass**:
die mittige Öffnung (16) in einem Abstand von ihrem Ende (16a), das an der Außenoberfläche mündet, eine Beschränkung (18) ihres Querschnitts aufweist, die einen Anschlag bildet.

2. Einsatz (10) nach Anspruch 1, **dadurch gekennzeichnet, dass** der Einlassabschnitt (12) auf einer zu der Außenoberfläche entgegengesetzten Seite einen Abschnitt (20) aufweist, der in Bezug auf die Achse der mittigen Öffnung eine axiale Rotationssymmetrie aufweist und zu der mittigen Öffnung, die durch ihn hindurchgeht, koaxial ist.

3. Einsatz (10) nach einem beliebigen der Ansprüche 1 oder 2, **dadurch gekennzeichnet, dass** er zwei seitliche Durchgangsöffnungen (22, 24) beinhaltet, die zu der mittigen Öffnung (16) parallel sind und in Bezug auf die Achse derselben symmetrisch sind und optional ein Gewinde aufweisen.

4. Form (1) zur Herstellung eines Teils, die eine Matrize (2) und mindestens einen Einsatz (10) nach einem beliebigen der Ansprüche 1 bis 3 aufweist, wobei die Form (1) eine Aufnahme (3) beinhaltet, die jeden Einsatz aufnimmt, wobei diese Aufnahme (3) eine zu der Außenform des Einlassabschnitts (12) des Einsatzes komplementäre Form aufweist, wobei ein Abdruckbereich der Außenoberfläche (14) des Einsatzes mit einer abformenden Oberfläche (5) der Matrize, die sich um die Aufnahme herum befindet, bündig abschließt, wenn sich der Einsatz im Inneren der Aufnahme befindet.

5. Form (1) nach Anspruch 4, wobei eine Schraube (30), die in das Innere der mittigen Öffnung (16) eingeführt wird, ein Gewindeende (32) aufweist, das auf der zu der Außenoberfläche (14) entgegengesetzten Seite von dem Einsatz vorsteht, wobei dieses Gewindeende in das Innere der Form geschraubt wird.

6. Form (1) nach Anspruch 5, wobei nur dasjenige Ende der Schraube, das sich im Inneren der Form befindet, über ein Gewinde verfügt, und der Einsatz zwischen einer Formungsposition, in der ein Abschnitt seiner Außenoberfläche mit der Oberfläche der Matrize um die Aufnahme herum bündig abschließt, und einer Einstellposition, in der sich sein Einlassabschnitt ausreichend weit außerhalb der Aufnahme befindet, um eine Drehung des Einsatzes um die Schraube herum zu gestatten, entlang der Schraube verschiebbar beweglich ist.

7. Form (1) nach Abschnitt 6, wobei in der Einstellposition ein Kopf (34) der Schraube an einer Beschränkung (18) des Querschnitts der mittigen Öffnung des Einsatzes anliegt.

8. Form (1) nach einem beliebigen der Ansprüche 4 bis 7, wobei, wenn der Einsatz im Inneren der Aufnahme der Form positioniert ist, sich die mittige Öffnung (16) des Einsatzes außerhalb der abformenden Oberfläche (5) der Matrize befindet und sich optional jede der seitlichen Öffnungen (22, 24) außerhalb der abformenden Oberfläche (5) der Matrize befindet.

9. Verfahren zur Montage eines Einsatzes (10) nach einem beliebigen der Ansprüche 1 bis 3 in eine Matrize (2) einer Form (1) zur Herstellung eines Teils, wobei die Form (1) eine Aufnahme (3) mit einer zu der Außenform des Einlassabschnitts des Einsatzes komplementären Form beinhaltet, beinhaltend:
(i) einen Schritt des Einführens des Einsatzes (10) in das Innere der Aufnahme (3) in eine Formungsposition, in der der Einlassabschnitt (12) des Einsatzes in das Innere der Aufnahme eingeführt ist und ein Abdruckbereich der Außenoberfläche (14) des Einsatzes mit einer abformenden Oberfläche (5) der Matrize, die sich um die Aufnahme herum befindet, bündig abschließt,
(ii) einen Schritt des Einführens einer Schraube (30) in das Innere der mittigen Öffnung des Einsatzes, wobei ein Gewindeende der Schraube in die Form geschraubt wird,
(iii) einen Schritt des Einstellens der Position des Einsatzes, beinhaltend:
- das Verschieben des Einsatzes entlang der Schraube bis in eine Einstellposition, in der sich sein Einlassabschnitt (12) ausreichend weit außerhalb der Aufnahme (3) befindet, um eine Drehung des Einsatzes um die Schraube herum zu gestatten,
- das Drehen des Einsatzes um die Schraube herum, bis sich der gewünschte Abdruckbereich (14a, 14b) der Außenoberfläche neben einem gewünschten Bereich der abformenden Oberfläche der Matrize befindet,
- das Verschieben des Einsatzes entlang der Schraube bis in die entsprechende Formungsposition,
(iv) einen Schritt des Fixierens des Einsatzes im Inneren der Aufnahme.

## Claims

1. Insert (10) for a mould (1) for manufacturing a component, comprising a fittable part (12) and an external surface (14), the fittable part (12) being intended to be fitted inside a recess (3) of said mould, the external surface being flush with a surface of the mould,
- a central orifice (16) exhibiting symmetry of revolution passing right through the fittable part (12) and opening on the side of the external surface of the insert,
- an external form (12a) of the fittable part, not comprising the external surface of the insert, exhibiting axial symmetry with respect to the axis of the central orifice,
- the external surface (14) having two imprint zones (14a, 14b) of different shape on either side of the central orifice, which are disposed symmetrically with respect thereto, **characterized in that**:
the central orifice (16) has, at a distance from its end (16a) opening onto the external surface, a narrowing (18) of its transverse section forming a stop.

2. Insert (10) according to Claim 1, **characterized in that** the fittable part (12) has, on a side opposite the external surface, a part (20) exhibiting axial symmetry of revolution with respect to the axis of the central orifice, which part is coaxial with the central orifice that passes through it.

3. Insert (10) according to either one of Claims 1 or 2, **characterized in that** it comprises two lateral through-orifices (22, 24) parallel to the central orifice (16) and symmetrical with respect to the axis thereof, which are optionally tapped.

4. Mould (1) for manufacturing a component having a die (2) and at least one insert (10) according to any one of Claims 1 to 3, the mould (1) comprising a recess (3) receiving each insert, this recess (3) having a shape complementary to the external form of the fittable part (12) of the insert, an imprint zone of the external surface (14) of the insert being flush with a moulding surface (5) of the die situated around the recess when the insert is inside the recess.

5. Mould (1) according to Claim 4, wherein a screw (30) inserted into the central orifice (16) has a tapped end (32) protruding from the insert on the side opposite the external surface (14), this tapped end being screwed into the mould.

6. Mould (1) according to Claim 5, wherein only the end of the screw situated inside the mould is tapped and the insert is able to move by sliding along the screw between a moulding position, in which a part of its external surface is flush with the surface of the die around the recess, and an adjustment position, in which its fittable part is sufficiently out of the recess to allow a rotation of the insert around the screw.

7. Mould (1) according to Claim 6, wherein, in the adjustment position, a head (34) of the screw is in abutment against a narrowing (18) of the transverse section of the central orifice of the insert.

8. Mould (1) according to any one of Claims 4 to 7, wherein, the insert being positioned inside the recess of the mould, the central orifice (16) of the insert is situated outside the moulding surface (5) of the die, and optionally each of the lateral orifices (22, 24) is situated outside the moulding surface (5) of the die.

9. Method for mounting an insert (10) according to any one of Claims 1 to 3 on a die (2) of a mould (1) for manufacturing a component, the mould (1) comprising a recess (3) with a shape complementary to the external form of the fittable part of the insert, comprising:
(i) a step of introducing the insert (10) into the recess (3), in a moulding position in which the fittable part (12) of the insert is inserted into the recess and an imprint zone of the external surface (14) of the insert is flush with a moulding surface (5) of the die situated around the recess,
(ii) a step of introducing a screw (30) into the central orifice of the insert, a tapped end of the screw being screwed into the mould,
(iii) a step of adjusting the position of the insert comprising:
- sliding the insert along the screw as far as an adjustment position in which its fittable part (12) is sufficiently out of the recess (3) to allow a rotation of the insert around the screw,
- rotating the insert around the screw until the desired imprint zone (14a, 14b) of the external surface is facing a desired zone of the moulding surface of the die,
- sliding the insert along the screw as far as the corresponding moulding position,
(iv) a step of fastening the insert inside the recess.
